# EUROPÄISCHE PATENTSCHRIFT

(11) **EP 1 240 442 B1**
(45) Veröffentlichungstag und Bekanntmachung des Hinweises auf die Patenterteilung: **28.01.2004**
(21) Anmeldenummer: 00989903.0
(22) Anmeldetag: 28.11.2000
(51) Int. Cl.: F16H 15/38

(54) **STUFENLOSES REIBRADGETRIEBE**
CONTINUOUSLY VARIABLE FRICTION GEAR TRANSMISSION
BOITE DE VITESSES TOROIDALE VARIABLE

(30) Priorität: 21.12.1999 DE 19961692
(43) Veröffentlichungstag der Anmeldung: 18.09.2002
(73) Patentinhaber: ZF FRIEDRICHSHAFEN Aktiengesellschaft, 88038 Friedrichshafen (DE)
(72) Erfinder: WAFZIG, Jürgen, 88097 Eriskirch (DE); SICH, Bernhard, 88045 Friedrichshafen (DE)
(86) Internationale Anmeldenummer: PCT/EP2000/011863
(87) Internationale Veröffentlichungsnummer: WO 2001/046604

(56) Entgegenhaltungen:
- EP-A- 0 425 914
- WO-A-99/05433
- WO-A-99/05434
- US-A- 4 934 206
- PATENT ABSTRACTS OF JAPAN vol. 1995, no. 01, 28. Februar 1995 (1995-02-28) -& JP 06 280955 A (MAZDA MOTOR CORP), 7. Oktober 1994 (1994-10-07)
- PATENT ABSTRACTS OF JAPAN vol. 018, no. 491 (M-1672), 13. September 1994 (1994-09-13) -& JP 06 159465 A (MAZDA MOTOR CORP), 7. Juni 1994 (1994-06-07)

## Beschreibung

Die vorliegende Erfindung betrifft ein stufenloses Reibradgetriebe, nach dem Oberbegriff des Anspruchs 1.

Ein gattungsbildendes Reibradgetriebe ist in der WO 99/05433 der Anmelderin beispielsweise beschrieben. Es weist koaxial zu einer gemeinsamen Welle angeordnete Eingangs- und Ausgangsscheiben auf, die paarweise zueinander angeordnet sind und deren Innenflächen toroidförmig ausgestaltet sind, sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragene Drehmoment auf die Ausgangsscheibe durch reibschlüssigen Kontakt, wobei die Drehzahl der Reibräder um so höher liegt, je größer der Abstand zwischen ihrer Berührungsstelle mit der Eingangsscheibe und der Drehachse ist. Die Drehzahl der Ausgangsscheibe hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder an einem Träger gelagert, der über eine Verschwenkeinrichtung ansteuerbar ist. Die beiden Eingangsscheiben der beiden Getriebeeinheiten sind hierbei drehfest mit einer Drehmomentwelle verbunden, während die beiden Ausgangsscheiben der beiden Getriebeeinheiten, die spiegelsymmetrisch zueinander und nebeneinander im Getriebe angeordnet sind, auf einer gemeinsamen Buchse angeordnet sind, welche drehbar auf der Drehmomentwelle gelagert ist. Die Drehmomentwelle wird von einer Eingangswelle durchsetzt, die mit einem Anfahrelement eines Kraftfahrzeuges, beispielsweise einem Drehmomentwandler oder einer naßlaufenden Anfahrkupplung der Antriebsmaschine des Fahrzeugs verbunden ist.

Ein weiteres Reibradgetriebe ist aus der WO 99/05434 bekannt. Bei diesem Reibradgetriebe ist im Getriebegehäuse ein Halterahmen lösbar befestigt, der einen oberen Rahmenbügel, einen unteren Rahmenbügel, Querjoche zur Befestigung von Zapfen (Posts) und Trägern (Trunnions) für die Reibräder sowie ein topfförmiges Lagerstützglied aufweist, das den oberen Rahmenbügel mit dem unteren Rahmenbügel verbindet. Dieses Lagerstützglied ist zwischen den beiden Hohlräumen, in denen sich die beiden Getriebeeinheiten befinden, angeordnet und wird von der Drehmomentwelle mittig durchsetzt. Die Rahmenbügel können mit dem Halterahmen (Powerframe) verschraubt oder verschweißt sein, wobei der Halterahmen die wesentlichen Elemente des Variators aufnimmt und als vormontierte Einheit in das Getriebegehäuse eingesetzt werden kann.

Nach dem Zusammenbau der Variatorteile außerhalb des Getriebegehäuses und Einsetzen des vormontierten Variators in das Getriebegehäuse sind weitere Teile wie Anfahrelement, Wendesatz und hydraulische Steuerung in das Getriebegehäuse einzubauen. Erst nach der Montage sämtlicher Teile ist eine Prüfung auf Funktionsfähigkeit des Variators möglich. Bei Fehlverhalten des Variators ist vor der eigentlichen Fehlersuche die Demontage der zusätlichen Bauteile wie Anfahrelement etc. erforderlich, bevor der vormontierte Variator ausgebaut werden kann. Derartige Ein- und Ausbauarbeiten sind jedoch mit einem hohen Zeit- und Kostenaufwand verbunden.

Aus der EP 0 425 914 A2 ist ein stufenlos verstellbares Reibradgetriebe mit einem Rahmen bekannt, wobei an dem Rahmen eine Kolben-/Zylindereinheit vorgesehen ist, welche mit einem Ende der Träger zur Aufnahme der Reibräder verbunden ist.

Ein weiteres stufenloses Reibradgetriebe ist in der US 5,033,322 A beschrieben, wobei zwei Verbindungsstücke zur Vermeidung von Relativbewegungen zwischen den Paaren von Reibradträgern vorgesehen sind.

Aufgabe der vorliegenden Erfindung ist es, den Variator nicht nur als vormontierte Baueinheit, sondern als autarke funktionsfähige Baueinheit vor dem Einbau in das Getriebegehäuse auszugestalten.

Ausgehend von einem stufenlosen Reibradgetriebe der eingangs näher genannten Art erfolgt die Lösung dieser Aufgabe mit den im Anspruch 1 angegebenen Merkmalen; vorteilhafte Ausgestaltungen sind in den Unteransprüchen beschrieben.

Erfindungsgemäß ist also vorgesehen, dass die Abstützkolben für die Träger in den Halterahmen integriert sind, sodass der Variator vor dem Einbau in das Getriebegehäuse als autarke funktionsfähige Einheit ausgestaltet ist, die vollständig vor dem Einbau getestet werden kann und erst nach erfolgreicher Abnahme als Baueinheit in das Getriebegehäuse montiert wird.

Der Halterahmen (Powerframe) ermöglicht eine Vormontage außerhalb des Getriebegehäuses, sodass die Abstützkolben für die Träger (Trunnions) ohne weiteres in diesen integriert werden können. Dabei kann z. B. die Rückführungsstange des als Vierkantenschieber ausgebildeten Regelventils die Schnittstelle darstellen; auch eine Integration dieses Vierkantenschiebers einschließlich oder ausschließlich des Schrittmotors in den Powerframe ist möglich.

Bei einem vorteilhaften Ausführungsbeispiel erfolgt die Schmierung und die Kühlung für die Scheiben der Getriebeeinheiten über die oberen und/oder unteren Zapfen (Posts), wobei der Powerframe durch einen oder mehrere in ihm angeordnete Kanäle den Schmierdruck aufnimmt und über zugeordnete Kanäle an die kritischen Teile der Scheiben weiterleitet.

Bei einem weiteren bevorzugten Ausführungsbeispiel ist im Halterahmen ein Beruhigungslabyrinth für die Entlüfung des Getriebegehäuses vorgesehen, da hierdurch ein Rückhalten des hochflüchtigen Reibfluids gewährleistet wird.

Ein weiterer Vorteil ist darin zu sehen, dass durch die Aufnahme der kompletten Abtriebskonstanten einschließlich des Zahnrades der Seitenwelle sowie der vollständigen Lagerung beider Zahnräder im Halterahmen eine einfache Montage sowie ein vorteilhaftes Toleranzkonzept für die beiden Reibräder ermöglicht wird, wie es für die extrem schnell drehenden Reibräder notwendig ist.

Im folgenden wird die Erfindung anhand der Zeichnung näher erläutert, in der die wesentlichen Teile eines erfindungsgemäß ausgestalteten Reibradgetriebes dargestellt sind.

Es zeigen:

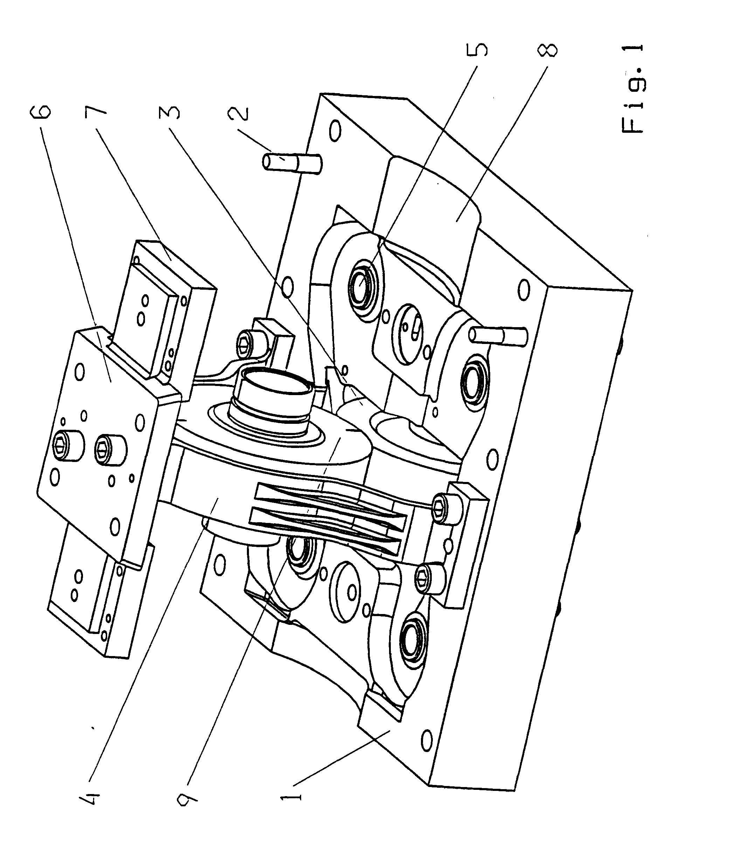

- Fig. 1: eine perspektivische Draufsicht auf einen Teil eines Reibradgetriebes und

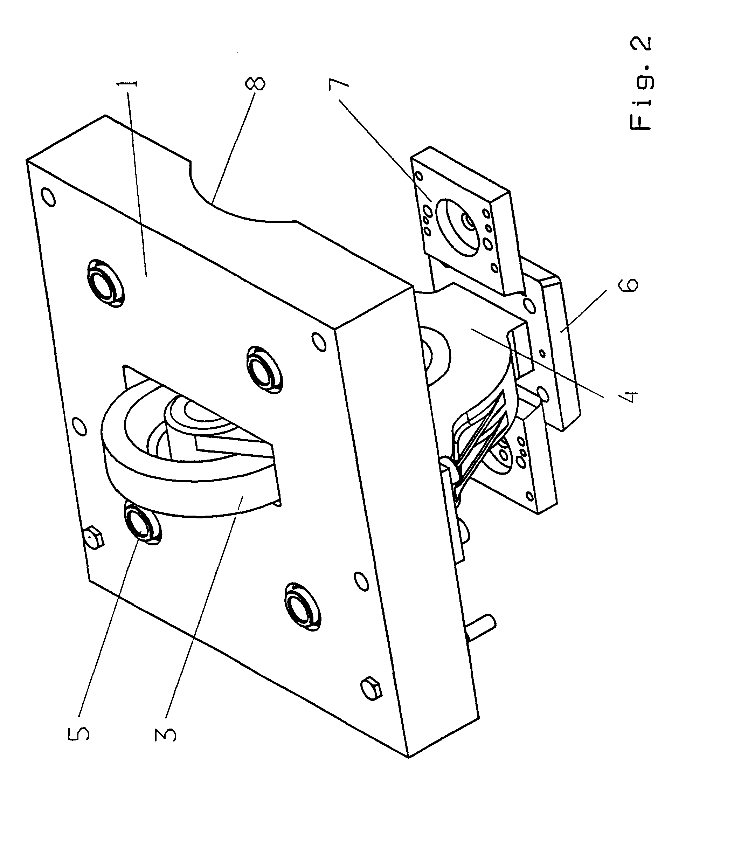

- Fig. 2: eine perspektivische Unteransicht dieses Reibradgetriebes.

Da Reibradgetriebe in ihrem Gesamtaufbau beispielsweise in den beiden eingangs erwähnten älteren Patentanmeldungen der Anmelderin in allen Einzelheiten beschrieben und dem Fachmann geläufig sind, sind in der Zeichnung nur die wesentlichen Bauteile dargestellt.

Mit 1 ist dabei eine Kolbeneinheit bezeichnet, mit 2 eine Paßschraube, mit 3 das sogenannte gear driven, mit 4 eine Lagerungplatte, mit 5 eine Führung für die Träger (Trunnion), mit 6 und 7 Teile des oberen Rahmenbügels, mit 8 eine Aussparung für eine der Eingangsscheiben und mit 9 das sogenannte gear drive. Die Kolbeneinheit 1 bildet den unteren Rahmenbügel und ist über die Lagerplatte 4 mit den oberen Rahmenbügeln 6, 7 verbunden. Diese Bauteile stellen die wesentlichen Bestandteile des Halterahmens dar.

In dem Halterahmen, durch den die Vormontage vor dem Einsetzen in das Getriebegehäuse ermöglicht wird, sind die Abstützkolben für die Trunnions integriert. Dadurch kann die Rückführungsstange zum Regelventil, das bevorzugt als Vierkantenschieber ausgestaltet ist, die Schnittstelle darstellen, wobei jedoch auch eine Integration dieses Regelventils einschließlich oder ausschließlich des Schrittmotors in den Halterahmen möglich ist.

Die Schmierung und die Kühlung der Scheiben der beiden Getriebeeinheiten kann über die oberen und/oder unteren Zapfen (Posts) erfolgen, wobei der Halterahmen zentral den Schmierdruck in einem (nicht dargestellten) Kanal aufnimmt und über mit ihm verbundene Kanäle an die kritischen Partien der Scheiben weiterleitet.

Ferner kann im Halterahmen ein (nicht dargestelltes) Beruhigungslabyrinth für die Entlüftung des Getriebegehäuses eingearbeitet werden, sodass ein Rückhalten des hochflüchtigen Traction-fluids gewährleistet wird.

Mit der erfindungsgemäßen Integration von Abstützung, Schmierung und Kühlung und ggf. auch des als Vierkantenschieber ausgebildeten Regelventils wird eine funktionstüchtige Baueinheit geschaffen, die vor dem Einbau in das Getriebegehäuse vollständig vorgetestet werden kann und erst nach erfolgreicher Abnahme in das Getriebegehäuse eingesetzt wird.

### Bezugszeichen

- 1: Kolbeneinheit (unterer Rahmenbügel)
- 2: Paßschraube
- 3: gear driven
- 4: Lagerplatte
- 5: Trägerführung
- 6: oberer Rahmenbügel
- 7: oberer Rahmenbügel
- 8: Aussparung
- 9: gear drive

## Patentansprüche

1. Stufenloses Reibradgetriebe, mit:
einem Gehäuse,
einer Eingangswelle,
einer koaxial dazu angeordneten Drehmomentwelle,
einem Variator, bestehend aus zwei koaxial zur Eingangswelle angeordneten Eingangsscheiben mit toroidförmigen Innenflächen, zwei koaxial zur Eingangswelle angeordneten Ausgangsscheiben mit toroidförmigen Innenflächen, wobei je eine Eingangsscheibe und eine Ausgangsscheibe ein Paar bilden und die beiden Ausgangsscheiben spiegelsymmetrisch zueinander und nebeneinander angeordnet sind, sowie aus mehreren Reibrädern, die zwischen den Innenflächen der Paare aus Eingangsscheiben und Ausgangsscheiben verschwenkbar angeordnet sind zur Übertragung eines Drehmomentes von der Eingangsscheibe auf die zugehörige Ausgangsscheibe,
einem Träger für jedes Reibrad,
einer Verschwenkeinrichtung mit einem Abstützkolben für jeden Träger,
einem Halterahmen mit einem oberen Rahmenbügel (6,7), einem unteren Rahmenbügel (1), Querjochen zur Befestigung von Trägern und einem Lagerstützglied (4), das den oberen Rahmenbügel mit dem unteren Rahmenbügel verbindet,
**dadurch gekennzeichnet, dass** die Abstützkolben für die Träger in einer Kolbeneinheit (1) in dem Halterahmen integriert sind, so dass der Variator vor dem Einbau in das Getriebegehäuse eine autarke, funktionsfähige Einheit bildet.

2. Stufenloses Reibradgetriebe nach Anspruch 1, **dadurch gekennzeichnet, dass** eine Ansteuerung für die Druckbeaufschlagung der Kolben, z. B. des Regelventils, in den Halterahmen integriert ist.

3. Stufenloses Reibradgetriebe nach Anspruch 2, **dadurch gekennzeichnet, dass** ein Schrittmotor in den Halterahmen integriert ist.

4. Stufenloses Reibradgetriebe nach einem der vorhergehenden Ansprüche, **dadurch gekennzeichnet, dass** der Halterahmen mit Kanälen zur zentralen Aufnahme und Weiterleitung des Schmier- bzw. Kühlfluids für die Scheiben zu den oberen und unteren Zapfen versehen ist.

5. Stufenloses Reibradgetriebe nach einem der vorhergehenden Ansprüche, **dadurch gekennzeichnet, dass** der Halterahmen mit Kanälen für das Ansteuer-/Regeldruckfluid für den Abstützkolben versehen ist.

6. Stufenloses Reibradgetriebe nach einem der vorhergehenden Ansprüche, **dadurch gekennzeichnet, dass** im Halterahmen ein Beruhigungslabyrinth für die Getriebegehäuseentlüftung vorgesehen ist.

## Claims

1. Continuously variable friction transmission, with:
a casing,
an input shaft,
a torque shaft, which is disposed coaxially with the input shaft,
a variator, consisting of two input discs, which are disposed coaxially with the input shaft and have toroidal inner faces, two output discs, which are disposed coaxially with the input shaft and have toroidal inner faces, wherein each input disc and output disc form a pair and the two output discs are disposed in mirror-symmetrical fashion and side by side, as well as of a plurality of friction wheels, which are pivotably disposed between the inner faces of the pairs of input discs and output discs to transmit a torque from the input disc to the associated output disc,
a carrier for each friction wheel,
a pivoting device with a support piston for each carrier,
a holding frame with an upper frame bracket (6, 7), a lower frame bracket (1), transverse yokes for fastening carriers and a bearing support member (4), which connects the upper frame bracket to the lower frame bracket,
**characterised in that** the support pistons for the carriers are integrated into a piston unit (1) in the holding frame, so that the variator forms an autonomous, operable unit before being installed in the transmission casing.,

2. Continuously variable friction transmission according to Claim 1, **characterised in that** an actuating system for pressurising the pistons, e.g. of the control valve, is integrated into the holding frame.

3. Continuously variable friction transmission according to Claim 2, **characterised in that** a stepping motor is integrated into the holding frame.

4. Continuously variable friction transmission according to any one of the preceding Claims, **characterised in that** the holding frame is provided with ducts for centrally taking up and transmitting the lubricating and cooling fluid for the discs to the upper and lower pins.

5. Continuously variable friction transmission according to any one of the preceding Claims, **characterised in that** the holding frame is provided with ducts for actuating/control pressure fluid for the support piston.

6. Continuously variable friction transmission according to any one of the preceding Claims, **characterised in that** the holding frame is provided with a smoothing labyrinth for the transmission casing ventilation.

## Revendications

1. Transmission variable en continu à roues de friction, comprenant :
un carter,
un arbre d'entrée,
un arbre de couple disposé coaxialement à celui-ci,
un variateur composé de deux disques d'entrée à surface intérieure toroïdale, disposés coaxialement à l'arbre d'entrée, deux disques de sortie à surface intérieure toroïdale, disposés coaxialement à l'arbre d'entrée, chaque disque d'entrée formant une paire avec un disque de sortie et les deux disques de sortie étant disposés en symétrie spéculaire l'un par rapport à l'autre, et l'un à côté de l'autre, ainsi que de plusieurs roues de friction qui sont disposées mobiles en pivotement entre les surfaces intérieures des paires de disques d'entrée et de disques de sortie, pour la transmission d'un couple du disque d'entrée au disque de sortie correspondant,
un support pour chaque roue de friction,
un dispositif de pivotement comprenant un piston d'appui pour chaque support,
un châssis de fixation pourvu d'une traverse supérieure de châssis (6, 7), d'une traverse inférieure de châssis (1), d'arceaux pour la fixation des supports et un organe d'appui de palier (4) qui relie la traverse supérieure de châssis à la traverse inférieure de châssis,
**caractérisée en ce que** les pistons d'appui pour les supports sont intégrés dans une unité de pistons (1) prévue dans le châssis de fixation, de sorte qu'avant même d'être monté dans le carter de la transmission, le variateur forme une unité autonome prête à fonctionner.

2. Transmission variable en continu à roues de friction selon la revendication 1, **caractérisée en ce qu'**une commande pour la charge de pression des pistons, par exemple, de la soupape de régulation, est intégrée dans le châssis de fixation.

3. Transmission variable en continu à roues de friction, selon la revendication 2, **caractérisée en ce qu'**un moteur pas à pas est intégré dans le châssis de fixation.

4. Transmission variable en continu à roues de friction, selon l'une des revendications précédentes, **caractérisée en ce que** le châssis de fixation est pourvu de canaux pour recevoir au centre et transmettre aux tourillons supérieurs et inférieurs le fluide de lubrification ou de refroidissement pour les disques.

5. Transmission variable en continu à roues de friction, selon l'une des revendications précédentes, **caractérisée en ce que** le châssis de fixation est pourvu de canaux pour le fluide sous pression de commande/régulation pour les pistons d'appui.

6. Transmission variable en continu à roues de friction, selon l'une des revendications précédentes, **caractérisée en ce que**, dans le châssis de fixation, est prévu un labyrinthe de stabilisation pour la décharge d'air du carter de la transmission.
